# EUROPÄISCHE PATENTSCHRIFT

(11) **EP 2 089 611 B1**
(45) Veröffentlichungstag und Bekanntmachung des Hinweises auf die Patenterteilung: **10.10.2018**
(21) Anmeldenummer: 07856267.5
(22) Anmeldetag: 27.11.2007
(51) Int. Cl.: F01D 5/02

(54) **TURBOLADER UND ENTSPRECHENDES HERSTELLUNGSVERFAHREN**
TURBOCHARGER AND CORRESPONDING FABRICATION PROCESS
TURBOCOMPRESSEUR ET PROCÉDÉ DE FABRICATION CORRESPONDANT

(30) Priorität: 29.11.2006 DE 102006056386
(43) Veröffentlichungstag der Anmeldung: 19.08.2009
(73) Patentinhaber: BorgWarner, Inc., Auburn Hills, MI 48326-2872 (US)
(72) Erfinder: HOLZSCHUH, Christian, 55232 Alzey (DE)
(74) Vertreter: Peterreins Schley
(86) Internationale Anmeldenummer: PCT/EP2007/010301
(87) Internationale Veröffentlichungsnummer: WO 2008/064868

(56) Entgegenhaltungen:
- EP-A- 1 193 370
- EP-A- 1 507 063
- EP-A- 1 621 774
- US-A- 4 043 146
- US-A- 4 340 317
- US-A- 5 339 521
- DEUTSCHES INSTITUT FÜR NORMUNG: "DIN 32 711 - Polygonprofile P3 G" DEUTSCHE NORMEN, März 1979 (1979-03), XP008090970
- DEUTSCHES INSTITUT FÜR NORMUNG: "DIN 32 712 - Polygonprofile P4C" DEUTSCHE NORMEN, März 1979 (1979-03), XP008090971

## Beschreibung

Die Erfindung betrifft einen Turbolader gemäß dem Oberbegriff des Anspruchs 1, sowie ein Verfahren zur Herstellung eines derartigen Turbinenrotors gemäß Anspruch 6.

Ein gattungsgemäßer Turbolader ist aus der EP 1 621 774 A2 und der US 5 339 521 A bekannt.

Es ist Aufgabe der vorliegenden Erfindung, einen Turbolader für einen Verbrennungsmotor gemäß dem Oberbegriff des Anspruches 1 zu schaffen, der eine einfach ausgebildete und herstellbare Verbindungseinrichtung zwischen Turbinenrotor und Turbinenrad möglich macht, die gleichzeitig die üblichen Anforderungen an Festigkeit und Wärmebeständigkeit erfüllt.

Hinsichtlich des erfindungsgemäßen Turboladers erfolgt die Lösung dieser Aufgabe durch die Merkmale des Anspruches 1. Hinsichtlich des Verfahrens zur Herstellung eines Turbinenrotors erfolgt die Lösung der Aufgabe durch die Merkmale des Anspruchs 6.

Die jeweils auf die unabhängigen Ansprüche 1 und 6 zurückbezogenen Ansprüche beinhalten vorteilhafte Weiterbildungen der Erfindung.

So ist es beispielsweise insbesondere bei einem Turbinenrotor aus TiAl (Titanaluminidlegierung) und einer Rotorwelle aus Stahl, wie insbesondere Ventilstahl oder martensitischem, austenitischem oder hitzebeständigen Stahl, erfindungsgemäß möglich, die Achsen des Turbinenrades und der Rotorwelle gut aufeinander auszurichten und die Wärmeleitung vom Turbinenrad zur Rotorwelle zu vermindern.

Ferner ergibt sich der Vorteil, dass die Verbindungseinrichtung des erfindungsgemäßen Turboladers bzw. des erfindungsgemäßen Turbinenrotors ohne zusätzliche Hilfsmittel, wie z.B. einem Lot, auskommt.

Zu weiteren Vorteilen der Erfindung kann auf folgende Auflistung verwiesen werden:
- einfacher Aufbau,
- geringe Teileanzahl,
- einfache, prozesssichere Vorbereitung der Einzelteile des erfindungsgemäßen Turbinenrotors,
- relativ einfacher Fügeprozess,
- Ausnutzung ähnlicher physikalischer Werte der Werkstoffe des Turbinenrotors,
- Verzicht auf Gefügeänderungen der Werkstoffe aufgrund von reduziertem Wärmeeinfluss beim Fügen,
- Vermeidung von Rissen in der Titanaluminidlegierung durch Bearbeitung der Teile des Turbinenrotors mit geometrisch unbestimmter Schneide (Schleifen), wodurch der Werkstoff Druckeigenspannungen besitzt, die von Vorteil für die Vermeidung von Rissen sind,
- Verwendung von vorgedrehten Rotorwellen, wobei aufgrund der engen Passung und des geringen Radialspiels beider Partner des erfindungsgemäßen Rotors eine bereits auf Schleifmaß vorgedrehte, im Bestfall sogar eine fertig gedrehte Rotorwelle, gefügt werden kann. Dies ergibt den weiteren Vorteil, dass sich im Vorfeld Fertigungskosten reduzieren lassen, wobei daneben die mechanische Belastung der Fügeteile durch eine Schleifbearbeitung, die eine Druckspannung in den Oberflächen induziert, vermindert werden kann, was sich positiv hinsichtlich der Festigkeit der Verbindung bemerkbar macht.

Weitere Einzelheiten, Vorteile und Merkmale der vorliegenden Erfindung ergeben sich aus nachfolgender Beschreibung von Ausführungsbeispielen anhand der beigefügten Zeichnung. Darin zeigt:
- Fig. 1: eine teilweise aufgebrochene perspektivische Darstellung eines erfindungsgemäßen Turboladers,
- Fig. 2: eine teilweise aufgebrochene Seitenansicht eines erfindungsgemäßen Turbinenrotors des Turboladers gemäß Fig. 1 vor der Verbindung von Rotorwelle und Turbinenrad,
- Fig. 3: eine der Fig. 2 entsprechende Darstellung des Turbinenrotors nach Verbindung von Rotorwelle und Turbinenrad, und
- Fig. 4A-4C: verschiedene Varianten von Querschnitten eines Zapfens einer Verbindungseinrichtung des erfindungsgemäßen Turbinenrotors.

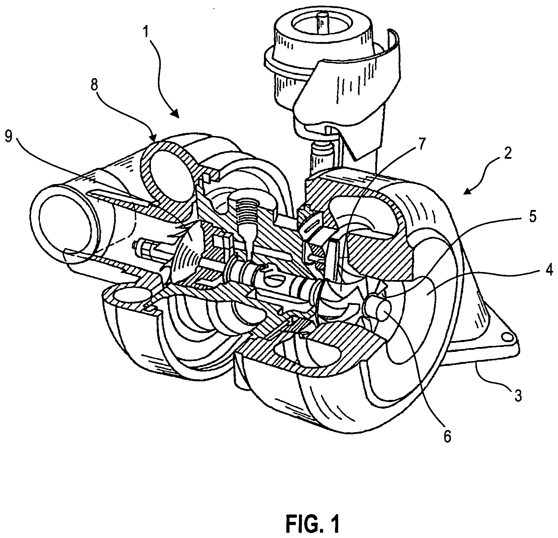

In Fig. 1 ist ein erfindungsgemäßer Turbolader 1 in teilweise aufgebrochener Darstellung veranschaulicht.

Der Turbolader 1 weist eine Turbine 2 auf, die eine Abgaseintrittsöffnung 3 und eine Abgasaustrittsöffnung 4 umfasst.

Ferner ist im Turbinengehäuse der Turbine 2 ein Turbinenrad 5 angeordnet, das auf einem Ende einer Rotorwelle 6 befestigt ist.

Eine Mehrzahl von Schaufeln, von denen in Fig. 1 nur die Schaufel 7 zu sehen ist, ist im Turbinengehäuse zwischen der Abgaseintrittsöffnung 3 und dem Turbinenrad 5 angeordnet.

Ferner weist der Turbolader 1 einen Verdichter 8 auf, der ein Verdichterrad 9 umfasst, das auf dem anderen Ende der Rotorwelle 6 befestigt und im Verdichtergehäuse des Verdichters 8 angeordnet ist.

Natürlich weist der erfindungsgemäße Turbolader 1 auch alle anderen üblichen Bauteile eines Turboladers, wie ein Lagergehäuse mit einer Lagergehäuseeinheit usw., auf, die jedoch nachfolgend nicht beschrieben werden, da sie für die Erläuterung der Prinzipien vorliegender Erfindung nicht erforderlich sind.

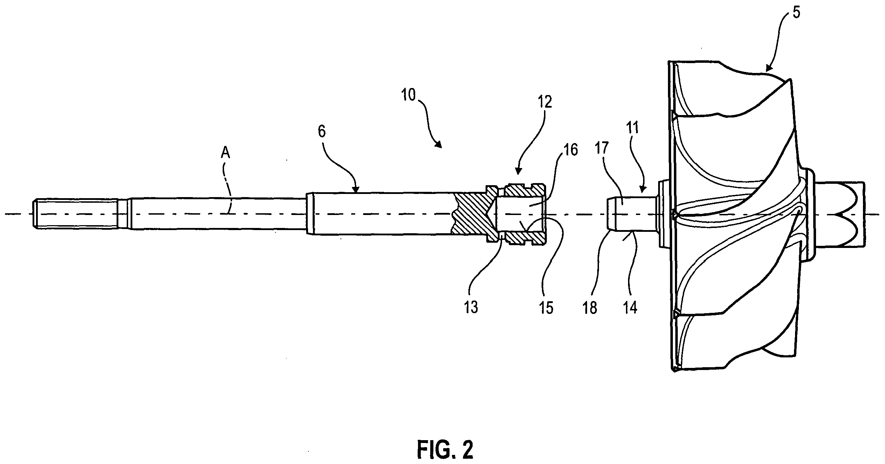

In Fig. 2 ist eine teilweise im Schnitt anschauliche Darstellung eines Turbinenrotors 10 dargestellt, bevor dessen Rotorwelle 6 und dessen Turbinenrad 5 miteinander verbunden sind.

Wie Fig. 2 veranschaulicht, weist die Rotorwelle 6 an einem ihrer Enden ein Anschlussteil 12 auf, das in Fig. 2 im Schnitt dargestellt ist. Aus dieser Darstellung wird deutlich, dass das Anschlussteil 12 bei der in Fig. 2 dargestellten Ausführungsform eine zentrische Bohrung 16 aufweist, die mit einer quer zur Mittelachse A der Rotorwelle 6 verlaufenden Entlüftungsbohrung 13 versehen ist.

Das Turbinenrad 5 weist einen Befestigungsabschnitt auf, der im Beispielsfalle als Zapfen 17 ausgebildet ist. In Fig. 2 sind ferner die Außenumfangsfläche bzw. Mantelfläche 14 des Zapfens 17 und die Innenumfangsfläche bzw. Innenmantelfläche 15 der Bohrung 16 veranschaulicht, die zusammen eine Verbindungseinrichtung bilden, die erfindungsgemäß als Pressverbindung ausgebildet ist. Die Dimension der Bohrung 16 und des Zapfens 17 sind erfindungsgemäß so vorgesehen, dass zum Zusammenfügen von Rotorwelle 6 und Turbinenrad 5 eine Übermaßpassung herstellbar ist, die gemäß DIN ISO 286 T2 ausgelegt ist.

Beispielsweise kann es sich um eine Übermaßpassung H6/r5 handeln.

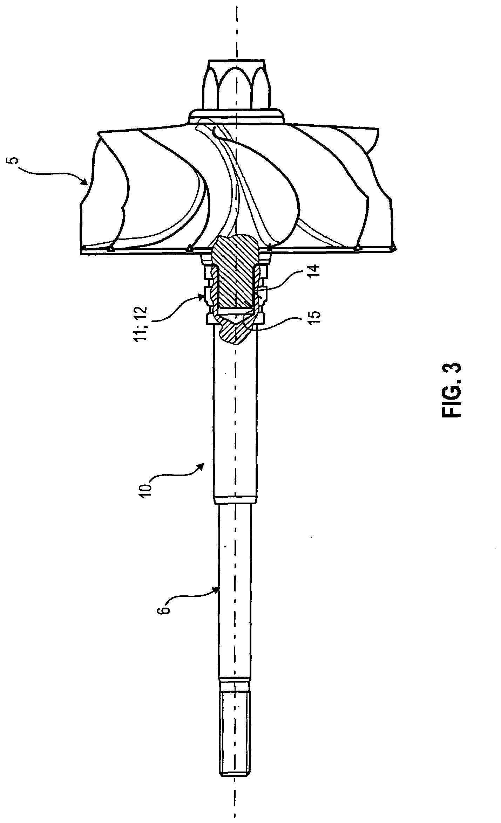

Die fertig gefügte Turbinenrotoranordnung 10 ist der Fig. 3 entnehmbar, wobei die Entlüftungsbohrung 13 sicherstellt, dass beim Fügen der Teile auftretende Sperrluft, die ein ansonsten eingeschlossenes Luftvolumen darstellen würde, entweichen kann.

Obwohl in den Fig. 2 und 3 das Turbinenrad 5 mit einem Zapfen 17 und die Rotorwelle 6 mit einer entsprechend dimensionierten Bohrung 16 versehen ist, kann die Verbindung zwischen diesen Teilen auch durch die umgekehrte Anordnung hergestellt werden, also durch eine Rotorwelle 6, die einen Zapfen aufweist und ein Turbinenrad, das eine entsprechend ausgebildete Bohrung umfasst.

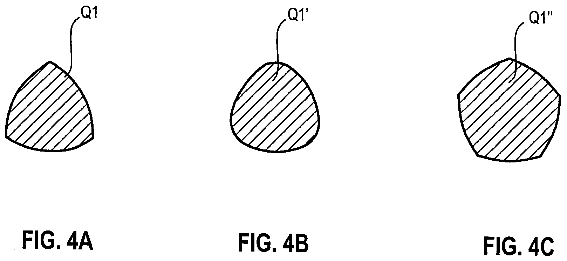

In den Fig. 4A-4C sind unterschiedliche Querschnittsformen dargestellt, die für die Außenfläche 14 des Zapfens 17 denkbar sind.

Die Fig. 4A-4C zeigen Querschnitte in Form eines Gleichdicks, die mit Q1, Q1' und Q1" gekennzeichnet sind.

Hierbei ist der Querschnitt Q1 ein dreieckiges Gleichdick, wobei durch diesen Terminus ein Querschnitt dargestellt ist, der eine Figur darstellt, die für jede Richtung gleich dick ist.

Die Querschnittsform Q1' stellt das Gleichdick gemäß Fig. 4A mit abgerundeten Ecken dar.

In Fig. 4C ist ein fünfeckiges Gleichdick Q1" beispielhaft dargestellt. Vom Prinzip her sind auch andere Formen, wie insbesondere ein viereckiges Gleichdick denkbar.

Der Vorteil dieser Querschnittsform ist darin zu sehen, dass eine Kraft bzw. Drehmomentübertragung neben der Presspassung auch durch einen zusätzlichen Formschluss gewährleistet ist.

Zum erfindungsgemäßen Verfahren ist ergänzend auf folgendes zu verweisen:
Der erfindungsgemäße Turbinenrotor 10 kann vorzugsweise aus dem Material TiAl bestehen und ein durch Feinguss hergestelltes Turbinenrad 5 umfassen. Die Rotorwelle 6 wiederum ist vorzugsweise aus Ventilstahl bzw. hitzebeständigem, martensitischem oder austenitischem Stahl hergestellt.

Das erfindungsgemäße Verfahren zur Herstellung des zuvor beschriebenen Turbinenrotors 10 zeichnet sich u.a. dadurch aus, dass ohne Verwendung eines zusätzlichen Hilfsmittels, beispielsweise eines Lotes, die Verbindung zwischen den beiden Bauteilen 5 und 6 herstellbar ist. Das zur Verbindung dieser Teile 5, 6 notwendige Passmaß ist von der Größe der Bauteile 5, 6 und der Belastung abhängig.

Vorzugsweise erforderliche enge Toleranzen des Zapfens 17 des Turbinenrades 5 können durch Schleifen erzielt werden, wobei erreichbar ist, dass das Turbinenrad 5 im Pressverband an seiner Fügefläche Druckspannungen aufweist, die einem eventuell relativ spröden Werkstoffverhalten entgegenkommt.

Die Rotorwelle 6 wird erfindungsgemäß mit einer passgenauen Bohrung 16 versehen. Hierbei ist bevorzugt, dass der Zapfen des Turbinenrades eine Einführschräge bzw. Fase 18 aufweist, die das Fügen der beiden Teile 5, 6 erleichtert. Die Werkstoffkombination TiAl/Stahl kann unterschiedlich gewählt werden, wobei allerdings ein Ventilstahl eine bevorzugte Ausführungsform darstellt, da sich dadurch zwischen dem Turbinenrad 5 und der Rotorwelle 6 relativ gleiche Wärmeausdehnungskoeffizienten ergeben, die einen sicheren Verband über Temperatur erlauben.

Wie zuvor erläutert, ergibt sich die Presspassung durch die beiden aneinander liegenden Umfangsflächen bzw. Mantelflächen 14 bzw. 15 des Zapfens 17 bzw. der Bohrung 16, wobei zum Fügen des Turbinenrades 5 und der Rotorwelle 6 eine zusätzliche Fügevorrichtung verwendet werden kann, die die Welle, wenn diese mit der Bohrung 16 versehen ist, gleichmäßig am Umfang verteilt erwärmt und den Zapfen 17 des Turbinenrades 5 in die gleichmäßig erwärmte Welle einführt und auf Anschlag bringt.

Darüber hinaus ist es bei dieser Anordnung vorteilhaft, dass beide Fügepartner mit einer bestimmten Last zusammengefügt werden, die z.B. 0,1 N/mm² oder höher, aber geringer als die Fließspannung des Turbinenrads 5 und der Rotorwelle 6 ist.

Ferner kann der Fügevorgang unter einer Schutzatmosphäre, z.B. aus in Inerdgas oder Reduktionsgas, stattfinden, in der einer der Fügepartner durch Hochfrequenzerwärmung auf die notwendige Verbindungstemperatur erwärmt wird.

Ist jedoch, wie zuvor erläutert, der Zapfen 17 an der Rotorwelle 6 und die Bohrung 16 im Turbinenrad 5 angebracht, kann in einer Fügevorrichtung die Welle unter Zuhilfenahme eines stark temperaturreduzierenden Mediums, wie beispielsweise flüssigem Stickstoff, die Welle so stark abgekühlt werden, bis sie in die Bohrung 16 im Turbinenrad 5 passt.

Hinsichtlich der zuvor ebenfalls bereits erläuterten Entlüftungsbohrung 13 ist hervorzuheben, dass minimal eine Bohrung, jedoch auch eine Mehrzahl derartiger Bohrungen vorgesehen werden kann.

In Ergänzung zur voranstehenden schriftlichen Erläuterung der Merkmale der Erfindung wird zur ergänzenden Offenbarung der Erfindung auf die zeichnerische Darstellung derselben in den Fig. 1 bis 4C explizit Bezug genommen.

### Bezugszeichenliste

- 1: Turbolader/Abgasturbolader
- 2: Turbine
- 3: Abgaseintrittsöffnung
- 4: Abgasaustrittsöffnung
- 5: Turbinenrad
- 6: Rotorwelle
- 7: Schaufeln
- 8: Kompressor
- 9: Kompressorrad
- 10: Turbinenrotor
- 11: Befestigungsabschnitt
- 12: Anschlussteil
- 13: Entlüftungsbohrung
- 14, 15: Verbindungseinrichtung = Mantelflächen von 11 bzw. 12
- 16: Bohrung
- 17: Zapfen
- 18: Einführschräge/Fase
- Q1, Q1', Q1": Querschnitte (Gleichdick in verschiedenen Varianten)

## Patentansprüche

1. Turbolader (1)
- mit einem Verdichter (8), der ein Verdichterrad (9) aufweist, das auf einem Ende einer Rotorwelle (6) fixiert ist; und
- mit einer Turbine (2), die einen Turbinenrotor (10) aufweist, der ein Turbinenrad (5) umfasst, das einen Befestigungsabschnitt (11) aufweist, der mit einem Anschlussteil (12) der Rotorwelle (6) über eine Verbindungseinrichtung (14, 15) verbindbar ist,
**dadurch gekennzeichnet,**
- **dass** die Verbindungseinrichtung (14, 15) als Kombination einer Pressverbindung und Formschlussverbindung ausgebildet ist, wobei der Querschnitt (Q1, Q1', Q1") des Anschlussteils (12) als Gleichdick ausgebildet ist,
- **dass** der Befestigungsabschnitt (11) als Bohrung (16) und das Anschlussteil (12) als Zapfen (17) ausgebildet ist, oder
- **dass** der Befestigungsabschnitt (11) als Zapfen (17) und das Anschlussteil (12) als Bohrung (16) ausgebildet ist, und
- **dass** die Bohrung (16) mit einer Entlüftungsbohrung (13) versehen ist.

2. Turbolader nach Anspruch 1, **dadurch gekennzeichnet, dass** das Gleichdick (Q1') als Bogendreieck ausgebildet ist.

3. Turbolader nach Anspruch 1 oder 2, **dadurch gekennzeichnet, dass** das Gleichdick (Q1") als gleichdickes Vieleck ausgebildet ist.

4. Turbolader nach einem der Ansprüche 1 bis 3, **dadurch gekennzeichnet, dass** das Material des Turbinenrades (5) TiAl ist.

5. Turbolader nach einem der Ansprüche 1 bis 4, **dadurch gekennzeichnet, dass** das Material der Rotorwelle (6) Ventilstahl oder ein martensitischer, hitzebeständiger oder austenitischer Stahl ist.

6. Verfahren zur Herstellung eines Turbinenrotors (10) eines Turboladers (1) gemäss Anspruch 1, wobei der Turbinenrotor (10) ein Turbinenrad (5) aufweist, das mit einem Befestigungsabschnitt (11) versehen ist, der über eine Verbindungseinrichtung (14, 15) mit einem Anschlussteil (12) einer Rotorwelle (6) verbindbar ist, **dadurch gekennzeichnet, dass** die Dimensionen und die Querschnittsform des Befestigungsabschnitts (11) und des Anschlussteils (12) so gewählt werden, dass sich als Verbindungseinrichtung (14, 15) eine kombinierte Press-/ Formschlussverbindung ergibt, wobei das Anschlussteil (12) der Rotorwelle (6) als Bohrung (16) ausgeführt wird und der Befestigungsabschnitt (11) als Zapfen (17) ausgeführt wird, wobei zur Herstellung der Presspassung die Bohrung (16) an ihrem Umfang verteilt gleichmäßig erwärmt wird und danach mit dem Zapfen (17) zusammengefügt wird, oder wobei der Befestigungsabschnitt (11) als Bohrung (16) ausgeführt und das Anschlussteil (12) der Rotorwelle (6) als Zapfen ausgebildet wird, der zur Erstellung der Presspassung vor dem Fügen so stark gekühlt wird, dass das Zusammenführen von Bohrung und Zapfen ermöglicht wird, wonach nach Erwärmung des Zapfens die Verbindungspassung erzeugt wird, und wobei die Bohrung (16) mit einer Entlüftungsbohrung (13) versehen wird.

7. Verfahren nach Anspruch 6, **dadurch gekennzeichnet, dass** die Rotorwelle (6) vorgedreht oder fertiggedreht wird.

8. Verfahren nach Anspruch 6 oder 7, **dadurch gekennzeichnet, dass** die Tiefe der Bohrung (16) größer als die Länge des Zapfens (17) eingestellt wird und die Entlüftungsbohrung (13) in einem im zusammengefügten Zustand von Rotorwelle (6) und Turbinenrad (5) nicht vom Zapfen (17) überdeckten Bereich der Bohrung (16) angeordnet wird.

## Claims

1. Turbocharger (1)
- comprising a compressor (8) having a compressor wheel (9) which is fixed to one end of a rotor shaft (6); and
- comprising a turbine (2) having a turbine rotor (10) which comprises a turbine wheel (5) having a fastening portion (11) which can be connected to a connection part (12) of the rotor shaft (6) by means of a connection device (14, 15),
**characterized**
- **in that** the connection device (14, 15) is embodied as a combination of a press connection and a positive-locking connection, wherein the cross section (Q1, Q1', Q1") of the connection part (12) is embodied as an orbiform,
- **in that** the fastening portion (11) is embodied as a bore (16) and the connection part (12) is embodied as a journal (17), or
- **in that** the fastening portion (11) is embodied as a journal (17) and the connection part (12) is embodied as a bore (16),
- and **in that** the bore (16) is provided with a vent bore (13).

2. Turbocharger according to Claim 1, **characterized in that** the orbiform (Q1') is embodied as a triangle of arcs.

3. Turbocharger according to Claim 1 or 2, **characterized in that** the orbiform (Q1") is embodied as an orbiformal polygon.

4. Turbocharger according to one of Claims 1 to 3, **characterized in that** the material of the turbine wheel (5) is TiAl.

5. Turbocharger according to one of Claims 1 to 4, **characterized in that** the material of the rotor shaft (6) is valve steel or a martensitic, heat-resistant or austenitic steel.

6. Process for producing a turbine rotor (10) of a turbocharger (1) according to Claim 1, wherein the turbine rotor (10) has a turbine wheel (5) provided with a fastening portion (11) which can be connected to a connection part (12) of a rotor shaft (6) by means of a connection device (14, 15), **characterized in that** the dimensions and the cross-sectional form of the fastening portion (11) and of the connection part (12) are selected such that a combined press/positive-locking connection is established as the connection device (14, 15), wherein the connection part (12) of the rotor shaft (6) is designed as a bore (16) and the fastening portion (11) is designed as a journal (17), wherein the press fit is produced by heating the bore (16) uniformly over its circumference and then joining it to the journal (17), or wherein the fastening portion (11) is designed as a bore (16) and the connection part (12) of the rotor shaft (6) is embodied as a journal which, in order to produce the press fit, is cooled before the joining operation to such an extent that it is possible to bring the bore and the journal together, after which the connection fit is produced once the journal has been heated, and wherein the bore (16) is provided with a vent bore (13).

7. Process according to Claim 6, **characterized in that** the rotor shaft (6) is pre-turned or finish-turned.

8. Process according to Claim 6 or 7, **characterized in that** the depth of the bore (16) is set to be greater than the length of the journal (17), and the vent bore (13) is arranged in a region of the bore (16) which is not covered by the journal (17) in the state in which the rotor shaft (6) and the turbine wheel (5) have been joined together.

## Revendications

1. Turbocompresseur (1)
- avec un compresseur (8), qui présente une roue de compresseur (9) qui est fixée sur une extrémité d'un arbre de rotor (6), et
- avec une turbine (2), qui présente un rotor de turbine (10), qui comprend une roue de turbine (5) qui présente une partie de fixation (11), qui peut être assemblée à une partie de raccordement (12) de l'arbre de rotor (6) au moyen d'un dispositif d'assemblage (14, 15),
**caractérisé en ce que**
- le dispositif d'assemblage (14, 15) est formé par une combinaison d'un assemblage à ajustement serré et d'un assemblage par emboîtement, dans lequel la section transversale (Q1, Q1', Q1") de la partie de raccordement (12) est réalisée sous la forme d'une pièce d'épaisseur uniforme,
- la partie de fixation (11) est formée par un alésage (16) et la partie de raccordement (12) est formée par un pivot (17), ou
- la partie de fixation (11) est formée par un pivot (17) et la partie de raccordement (12) est formée par un alésage (16), et
- l'alésage (16) est doté d'un trou d'aération (13).

2. Turbocompresseur selon la revendication 1, **caractérisé en ce que** la pièce d'épaisseur uniforme (Q1') est réalisée sous forme de triangle curviligne.

3. Turbocompresseur selon la revendication 1 ou 2, **caractérisé en ce que** la pièce d'épaisseur uniforme (Q1") est réalisée sous la forme d'un polygone d'épaisseur uniforme.

4. Turbocompresseur selon l'une quelconque des revendications 1 à 3, **caractérisé en ce que** le matériau de la roue de turbine (5) est du TiAl.

5. Turbocompresseur selon l'une quelconque des revendications 1 à 4, **caractérisé en ce que** le matériau de l'arbre de rotor (6) est un acier pour soupapes ou un acier martensitique, réfractaire ou austénitique.

6. Procédé de fabrication d'un rotor de turbine (10) d'un turbocompresseur (1) selon la revendication 1, dans lequel le rotor de turbine (10) présente une roue de turbine (5), qui est dotée d'une partie de fixation (11), qui peut être assemblée à une partie de raccordement (12) d'un arbre de rotor (6) au moyen d'un dispositif d'assemblage (14, 15), **caractérisé en ce que** l'on choisit les dimensions et la forme de section transversale de la partie de fixation (11) et de la partie de raccordement (12) de telle manière qu'il en résulte un dispositif d'assemblage (14, 15) par assemblage combiné à ajustement serré et à emboîtement, dans lequel on réalise la partie de raccordement (12) de l'arbre de rotor (6) sous la forme d'un alésage (16) et on réalise la partie de fixation (11) sous la forme d'un pivot (17), dans lequel pour la réalisation de l'ajustement serré on chauffe l'alésage (16) de façon uniformément répartie à sa périphérie et on l'assemble ensuite avec le pivot (17), ou dans lequel on réalise la partie de fixation (11) sous la forme d'un alésage (16) et on réalise la partie de raccordement (12) de l'arbre de rotor (6) sous la forme d'un pivot, que l'on refroidit tellement fortement, avant l'assemblage afin de réaliser l'ajustement serré, qu'il soit possible de joindre l'alésage et le pivot, puis on produit l'assemblage par ajustement serré par chauffage du pivot, et dans lequel l'alésage (16) est doté d'un trou d'aération (13).

7. Procédé selon la revendication 6, **caractérisé en ce que** l'on soumet l'arbre de rotor (6) à un tournage de dégrossissage ou à un tournage de finition.

8. Procédé selon la revendication 6 ou 7, **caractérisé en ce que** l'on règle une profondeur de l'alésage (16) plus grande que la longueur du pivot (17) et le trou d'aération (13) est disposé dans une région de l'alésage (16) non couverte par le pivot (17) dans l'état assemblé de l'arbre de rotor (6) et de la roue de turbine (5).
